(19) **Europäisches Patentamt / European Patent Office / Office européen des brevets**

(11) **EP 4 707 325 A1**

(12) **EUROPEAN PATENT APPLICATION**
published in accordance with Art. 153(4) EPC

(43) Date of publication:
11.03.2026  Bulletin 2026/11

(21) Application number: 24800083.8

(22) Date of filing: 24.04.2024

(51) International Patent Classification (IPC):
$C08J\ 5/18^{(2006.01)}$   $B32B\ 15/08^{(2006.01)}$
$B32B\ 15/085^{(2006.01)}$   $B32B\ 27/32^{(2006.01)}$
$C08L\ 23/10^{(2006.01)}$   $H01G\ 4/32^{(2006.01)}$

(52) Cooperative Patent Classification (CPC):
B29C 55/02; B32B 15/08; B32B 15/085;
B32B 27/32; C08J 5/18; C08L 23/10; C08L 101/02;
H01G 4/32

(86) International application number:
PCT/JP2024/016112

(87) International publication number:
WO 2024/228352 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.05.2023  JP 2023076076
25.10.2023  JP 2023183547

(71) Applicant: Oji Holdings Corporation
Chuo-ku
Tokyo 104-0061 (JP)

(72) Inventors:
• IKEDA, Kazuo
Tokyo 104-0061 (JP)
• IKEDA, Masaki
Tokyo 104-0061 (JP)
• ISHIWATA, Tadakazu
Tokyo 104-0061 (JP)
• SUEI, Takumi
Tokyo 104-0061 (JP)

(74) Representative: Müller-Boré & Partner
Patentanwälte PartG mbB
Friedenheimer Brücke 21
80639 München (DE)

(54) **STRETCHED FILM, METAL LAMINATED FILM USING SAME, AND FILM CAPACITOR**

(57)  The present invention provides a stretched film whose physical property deterioration, such as reduced rigidity and reduced electrical insulation properties, is suppressed even in a high-temperature environment exceeding 110°C, and which is also excellent in its own stretchability and adaptability for subsequent processing steps. Specifically, the present invention provides a stretched film comprising at least a layer A, wherein (1) the layer A contains, based on 100 mass% of the layer A, 55 mass% or more and 99 mass% or less of a polypropylene-based resin and 1 mass% or more and 45 mass% or less of a polymer having an alicyclic structure in a side chain thereof; and (2) the layer A is stretched in at least one direction.

EP 4 707 325 A1

## Description

Technical Field

The present invention relates to a stretched film, a metal-laminated film using the same, and a film capacitor, and particularly to a stretched film with excellent heat resistance suitable for use in capacitors.

Background Art

Stretched films containing polypropylene as a main component have moisture resistance, as well as rigidity, heat resistance, etc., and therefore find various industrial applications, including packaging applications. In recent years, high performance has been demanded along with the expansion of applications. In particular, the suppression of rigidity reduction at high temperatures is expected.

Further, stretched films containing polypropylene as a main component are used in film capacitor applications due to their excellent electrical properties. In electronic devices, electrical devices, and the like, for example, capacitors comprising a stretched film containing polypropylene as a main component are used as high-voltage capacitors; various switching power supplies; and filter capacitors, smoothing capacitors, or like capacitors for converters, inverters, or the like. Film capacitors are also used, for example, in inverters and converters that control the drive motors of electric vehicles and hybrid vehicles, for which demand has been increasing in recent years.

Film capacitors, in particular, film capacitors for vehicles, are increasingly used in high-temperature environments. For example, in devices that control the drive motors of vehicles (e.g., inverters and converters), semiconductors with high heat resistance (e.g., silicon carbide semiconductors) have been increasingly used in recent years. Accordingly, capacitors used in these devices are also required to have high heat resistance of, for example, 120°C or higher, preferably 130°C or higher. The upper operating temperature limit of capacitors produced using conventional polypropylene film is said to be about 110°C. It is extremely difficult to stably maintain electrical insulation properties in a high-temperature environment that exceeds the upper-limit operating temperature.

As a resin film with high heat resistance, in particular, as a film with excellent heat resistance and particularly excellent water vapor impermeability, Patent Literature 1 (PTL 1) discloses a film composed of a resin composition comprising a polyolefin containing polypropylene as a main component and further comprising a hydrogenated block copolymer.

As one of the resin films with high heat resistance, Patent Literature (PTL) 2 discloses a film produced using a polypropylene-based resin and a resin with an alicyclic structure in the main chain of a polymer, which is obtained by polymerizing a cyclic olefin monomer.

Citation List

Patent Literature

PTL 1: JP2014-37532A
PTL 2: WO2022/270577

Summary of Invention

Technical Problem

Resin films containing polypropylene as a main component tend to deteriorate in physical properties, such as rigidity and electrical insulation properties, as their operating temperature increases. Therefore, in general, a resin film containing polypropylene as a main component is stretched in at least one direction, preferably in two directions, to form a stretched film with improved rigidity and electrical insulation properties and allow the stretched film to maintain its rigidity and electrical insulation properties even when the operating temperature is in a high-temperature range exceeding 110°C. However, when the operating temperature is a high temperature of 120°C or higher, or an even higher temperature of 130°C or higher, it is difficult for even such a stretched film to maintain its rigidity and electrical insulation properties.

The film disclosed in PTL 1 exhibits excellent impermeability to water vapor due to a hydrogenated block copolymer contained therein. However, since the disclosed film is an unstretched film, its rigidity and electrical insulation properties cannot be considered high. Further, when a mixed resin is stretched, reduced rigidity and reduced electrical insulation properties are often observed due to, for example, pores formed within layers during stretching. Accordingly, finding out stretching conditions that improve physical properties while suppressing the formation of pores requires careful consideration. However, no findings regarding the stretching conditions are disclosed in PTL 1.

The film disclosed in PTL 2 is a stretched film that exhibits excellent electrical properties at high temperatures, the stretched film comprising a mixed resin. However, since the cyclic olefin-based resin to be mixed is a resin having an alicyclic structure in the polymer main chain, the resin is rigid. Therefore, for example, pores may form within the layers during stretching, making the film prone to break in subsequent processing steps (for example, a metal vapor deposition step in capacitor film applications). That is, the disclosed film has a problem in terms of poor productivity.

In particular, in film capacitor applications, the film is required to be thin in thickness. For example, a thickness of 10 $\mu$m or less, preferably a thickness of 5 $\mu$m or less, is required. However, a film within such a thickness range is more prone to break. In particular, increasing the film formation speed and vapor deposition speed to reduce costs leads to an even higher risk of breakage, thus posing a production-related problem.

Accordingly, an object of the present invention is to provide a stretched film whose physical property deterioration, such as reduced rigidity and reduced electrical insulation properties, is suppressed even in a high-temperature environment exceeding 110°C (in particular, a high-temperature environment of 120°C or higher), and which is also excellent in its own stretchability and adaptability for subsequent processing steps.

Solution to Problem

In order to solve the above problem, the present inventors conducted extensive research. As a result, the inventors found that the problem can be solved by a stretched film comprising a specific composition and comprising at least a layer A that is stretched in at least one direction. The present inventors conducted further research based on this finding and have accomplished the present invention.

Specifically, the present invention provides the following stretched films, as well as the following metal-laminated film and film capacitor using one of the stretched films.

1. A stretched film comprising at least a layer A, wherein

(1) the layer A contains, based on 100 mass% of the layer A,

55 mass% or more and 99 mass% or less of a polypropylene-based resin and
1 mass% or more and 45 mass% or less of a polymer having an alicyclic structure in a side chain thereof; and

(2) the layer A is stretched in at least one direction.

2. The stretched film according to Item 1, wherein the layer A contains, based on 100 mass% of the layer A,

55 mass% or more and 97 mass% or less of the polypropylene-based resin and
3 mass% or more and 45 mass% or less of the polymer having an alicyclic structure in a side chain thereof.

3. The stretched film according to Item 1 or 2, wherein the polymer has a glass transition temperature of 100°C or higher and 180°C or lower.
4. The stretched film according to any one of Items 1 to 3, wherein the alicyclic structure comprises a cyclohexane structure.
5. The stretched film according to any one of Items 1 to 4, wherein the stretched film has a thickness of 10 $\mu$m or less and a total light transmittance of 80% or more.
6. A metal-laminated film comprising the stretched film of any one of Items 1 to 5 and a metal layer laminated on one or both surfaces of the film.
7. A film capacitor comprising the stretched film of any one of Items 1 to 5.
8. A film capacitor comprising the metal-laminated film of Item 6.

Advantageous Effects of Invention

The present invention provides a stretched film whose physical property deterioration, such as reduced rigidity and reduced electrical insulation properties, is suppressed even in high-temperature environments exceeding 110°C, and which is also excellent in its own stretchability and adaptability for subsequent processing steps.

Description of Embodiments

In the present specification, the terms "comprise" and "contain" encompass the concepts of comprising, containing, consisting essentially of, and consisting of. In the present specification, when preferred upper and lower limits are described for a given range, any combination of these limits may be used. In the specification, a numerical range indicated as "A to B" includes the endpoints and means "A or more and B or less," unless otherwise specified.

## 1. Stretched Film

In one aspect, the present invention provides a stretched film comprising at least a layer A, wherein

(1) the layer A contains, based on 100 mass% of the layer A,

55 mass% or more and 99 mass% or less of a polypropylene-based resin and
1 mass% or more and 45 mass% or less of a polymer having an alicyclic structure in a side chain thereof; and

(2) the layer A is stretched in at least one direction (which may also be referred to below as "the stretched film of the present invention"). The stretched film is described below.

## 1-1. Polypropylene-Based Resin

The layer A of the stretched film of the present invention contains 55 mass% or more and 99 mass% or less of a polypropylene-based resin, based on the mass of the layer A taken as 100 mass%.

Examples of the polypropylene-based resin include propylene homopolymers such as isotactic polypropylene and syndiotactic polypropylene; copolymers of propylene and other olefins (e.g., ethylene, 1-butene), which may be random copolymers or block copolymers having at least two polymer blocks; long-chain branched polypropylene; and polypropylene-based resins produced using plant-derived raw materials.

When the polypropylene-based resin is a copolymer of propylene and another olefin, the propylene content of the copolymer is 50 mass% or more, preferably 80 mass% or more, and more preferably 90 mass% or more, based on the mass of the polypropylene-based resin taken as 100 mass%. Note that the polypropylene-based resin does not encompass polypropylene-based resins having an alicyclic structure in a side chain thereof.

The polypropylene-based resin contained in the layer A may be one polypropylene-based resin, or two or more polypropylene-based resins.

The polypropylene-based resin content of the layer A may be 55 mass% or more and 99 mass% or less, preferably 55 mass% or more and 97 mass% or less, more preferably 60 mass% or more and 90 mass% or less, and even more preferably 65 mass% or more and 85 mass% or less. In this case, the rigidity, electrical insulation properties, and stretchability of the stretched film of the present invention are improved. When the stretched film of the present invention is a multilayer film comprising one or more other layers (such as a skin layer described below) in addition to the layer A, the effect of improved stretchability is also achieved in cases in which the entire multilayer film is stretched (the same applies hereinafter).

The polypropylene-based resin contained in the layer A preferably has a melt mass flow rate (MFR) of 0.5 g/10 min or more and 6 g/10 min or less, more preferably 1 g/10 min or more and 5 g/10 min or less, and even more preferably 1.5 g/10 min or more and 4 g/10 min or less, as measured at 230°C under a load of 2.16 kg more. In this case, appropriate resin flowability is achieved during film stretching, resulting in improved stretchability.

The polypropylene-based resin contained in the layer A preferably has a melting point of 155°C or higher. In this case, electrical insulation properties and stretchability at high temperatures are improved. The melting point is more preferably 160°C or higher and 180°C or lower, and even more preferably 163°C or higher and 170°C or lower.

The polypropylene-based resin contained in the layer A preferably has a meso pentad fraction of 95 mol% or more and 99.9 mol% or less. When the meso pentad fraction is 95 mol% or more, the rigidity and electrical insulation properties of the stretched film of the present invention tend to improve. When the meso pentad fraction is 99.9 mol% or less, the stretchability tends to improve. The meso pentad fraction of the polypropylene-based resin is more preferably 96 mol% or more and 99.5 mol% or less; even more preferably 97 mol% or more and 99.2 mol% or less; and particularly preferably 98 mol% or more and 99 mol% or less.

The polypropylene-based resin contained in the layer A preferably has a heptane-insoluble (HI) content of 94 mass% or more and 99.9 mass% or less. When the heptane-insoluble content is 94 mass% or more, the rigidity and electrical insulation properties tend to improve. When the heptane-insoluble fraction is 99.9 mass% or less, the stretchability tends to improve. The heptane-insoluble fraction of the polypropylene-based resin is preferably 96 mass% or more and 99.5 mass% or less, more preferably 97 mass% or more and 99.2 mass% or less, and particularly preferably 98 mass% or more and 99 mass% or less.

The polypropylene-based resin contained in the layer A preferably has a number average molecular weight (Mn) of 30,000 or more and 70,000 or less, and more preferably 35,000 or more and 65,000 or less. When the layer A contains a polypropylene-based resin with such a number average molecular weight (Mn), the rigidity, electrical insulation properties, and stretchability of the stretched film of the present invention tend to improve.

The polypropylene-based resin contained in the layer A preferably has a weight average molecular weight (Mw) of 250,000 or more and 500,000 or less, and more preferably 300,000 or more and 450,000 or less. When the layer A contains a polypropylene-based resin with such a weight average molecular weight (Mw), the rigidity, electrical insulation properties, and stretchability of the stretched film of the present invention tend to improve.

The molecular weight distribution (Mw/Mn), which is calculated as a ratio of the weight average molecular weight (Mw) to the number average molecular weight (Mn) of the polypropylene-based resin contained in the layer A, is preferably 3 or more and 12 or less, more preferably 5 or more and 10 or less, and even more preferably 6 or more and 9.5 or less. When the layer A contains a polypropylene-based resin with such a molecular weight distribution (Mw/Mn), the rigidity, electrical insulation properties, and stretchability of the stretched film of the present invention tend to improve.

The polypropylene-based resin contained in the layer A preferably has a z-average molecular weight (Mz) of 700,000 or more and 3,000,000 or less, and more preferably 1,000,000 or more and 2,500,000 or less. When the layer A contains a polypropylene-based resin with such a z-average molecular weight (Mz), the rigidity, electrical insulation properties, and stretchability of the stretched film of the present invention tend to improve.

The molecular weight distribution (Mz/Mw), which is calculated as a ratio of z-average molecular weight (Mz) to weight average molecular weight (Mw) of the polypropylene-based resin contained in the layer A, is preferably 2 or more and 7 or less, more preferably 2.5 or more and 6 or less, and even more preferably 3 or more and 5 or less. When the layer A contains a polypropylene-based resin with such a molecular weight distribution (Mz/Mw), the rigidity, electrical insulation properties, and stretchability of the stretched film of the present invention tend to improve.

The polypropylene-based resin can be produced by using a known method. Examples of the polymerization method include gas-phase polymerization, bulk polymerization, and slurry polymerization. The polymerization may be a single-stage polymerization using one polymerization reactor, or a multi-stage polymerization using two or more polymerization reactors. The polymerization may also be carried out by adding hydrogen or a comonomer as a molecular weight modifier into the reactor. As polymerization catalysts, known Ziegler-Natta catalysts or metallocene catalysts can be used. Polymerization catalysts may contain a co-catalyst component or a donor. The meso pentad fraction, melt mass flow rate, molecular weight, and molecular weight distribution of the polypropylene-based resin can be controlled by appropriately adjusting the polymerization catalyst and other polymerization conditions used.

1-2. Polymers Having an Alicyclic Structure in a Side Chain thereof

The layer A of the stretched film of the present invention comprises a polymer having an alicyclic structure in a side chain thereof in an amount of 1 mass% or more and 45 mass% or less, based on the mass of the layer A taken as 100%. The polymer with an alicyclic structure in a side chain thereof contained in the layer A may be one polymer or two or more polymers.

As long as the content of the polymer with an alicyclic structure in a side chain thereof in the layer A is 1 mass% or more and 45 mass% or less, it is sufficient. The polymer content of the layer A is preferably 3 mass% or more and 45 mass% or less, more preferably 10 mass% or more and 40 mass% or less, and even more preferably 15 mass% or more and 35 mass% or less. In this case, the stretched film of the present invention has improved rigidity, electrical insulation properties, and stretchability.

The alicyclic structure refers to a structure containing one or more non-aromatic, saturated and/or unsaturated carbon ring structures. It may contain two or more carbon ring structures. The carbon ring structure may have a branch of an aliphatic hydrocarbon structure. The carbon ring structure may be bonded to a hydrocarbon chain of the polymer main chain directly or via a hydrocarbon chain.

Examples of carbon ring structures include monocyclic structures such as cyclopropane, cyclobutane, cyclopentane, cyclohexane, cycloheptane, cyclooctane, cyclononane, cyclodecane, cycloundecane, cyclododecane, and like cycloalkane structures, as well as cyclopropene, cyclobutene, cyclopentene, cyclohexene, cycloheptene, cyclooctene, and like cycloalkene structures. Preferable examples of bicyclic structures include bicyclic alkane structures such as bicycloundecane, and bicyclic alkene structures such as norbornene and norbornadiene. Among these, a polymer having a $C_4$-$C_8$ carbon ring structure is preferred from the viewpoint of stretchability. The polymer more preferably has a $C_4$-$C_8$ monocyclic carbon ring structure, even more preferably a $C_4$-$C_8$ monocyclic cycloalkane carbon ring structure, and particularly preferably a cyclohexane structure.

The polymer main chain consists mainly of an aliphatic hydrocarbon. Although the polymer main chain may contain a cyclic hydrocarbon structure and/or an aromatic hydrocarbon structure as structural units, it is preferable that such structures are not present in the polymer main chain. The aliphatic hydrocarbon of the polymer main chain may have branches of an aliphatic hydrocarbon structure and/or an aromatic hydrocarbon structure.

The polymer having an alicyclic structure in a side chain thereof may be a homopolymer that comprises as a structural unit a structure having an alicyclic structure in a side chain thereof. The polymer may be, for example, a polyvinylcycloolefin produced by homopolymerization of vinylcycloolefin. Examples of polyvinylcycloolefins include polyvinylcyclopropane, polyvinylcyclobutane, polyvinylcyclopentane, polyvinylcyclohexane, polyvinylcycloheptane, polyvinylcyclooctane, polyvinylcyclononane, polyvinylcyclodecane, polyvinylcycloundecane, and polyvinylcyclododecane. Homopolymers are preferred because the obtained film has improved rigidity and electrical insulation properties in a high-temperature environment. Among these, polyvinylcyclopentane, polyvinylcyclohexane, and polyvinylcycloheptane are preferable, and polyvinylcyclohexane is the most preferable.

Method for Producing Polymer Having an Alicyclic Structure in a Side Chain thereof

The method for producing a polymer having an alicyclic structure in a side chain thereof is not particularly limited. The polymer can be produced by a known method, such as radical polymerization, ionic polymerization (e.g., anionic polymerization and coordination anionic polymerization), or the like, for example, polymerization methods such as bulk polymerization, solution polymerization, and suspension polymerization.

Specifically, the polymer having an alicyclic structure in a side chain thereof according to the present invention can be produced by a polymerization reaction that is performed, for example, by a method comprising subjecting a monomer having an alicyclic structure (e.g., vinylcycloolefin) to sequential polymerization using a known initiator, such as an alkyl lithium compound or a dilithium compound; or a method comprising subjecting a monomer having an alicyclic structure to sequential polymerization and then adding a coupling agent to perform coupling.

Further, the polymer having an alicyclic structure in a side chain thereof can also be produced by polymerizing a monomer having an aromatic ring structure (e.g., styrene) using a known method and then performing a hydrogenation reaction. The hydrogenation reaction can be carried out, for example, by the method described in the section "Method for Producing a Hydrogenated Block Copolymer" below.

When the polymer is produced by a hydrogenation reaction, the degree of hydrogenation of the aromatic ring structure is preferably 50 mol% or more, more preferably 80 mol% or more, even more preferably 85 mol% or more, particularly preferably 90 mol% or more, and more particularly preferably 95 mol% or more. The degree of hydrogenation may be 100 mol%. Setting the degree of hydrogenation within the above specified range is preferable because it tends to improve stretchability.

The polymer having an alicyclic structure in a side chain thereof may be a copolymer comprising a structural unit having an alicyclic structure in a side chain thereof and further comprising one or more other structural units. The copolymer may be composed of a random copolymer or a block copolymer having at least two polymer blocks. From the viewpoint of stretchability, a copolymer is preferred, and a block copolymer is more preferred.

Examples of other structural units include ethylene, propylene, butene, pentene, hexene, heptene, and octene, which may or may not have side chains. Such other structural units may also contain both of a structural unit having side chains and a structural unit having no side chains. Examples of structural units having side chains include structural units comprising propylene, 1-butene, 1-pentene, 1-hexene, and 4-methyl-1-pentene as structural units. Other structural units may be unsaturated hydrocarbons; however, saturated hydrocarbons are preferred from the viewpoint of electrical insulation properties.

When the polymer having an alicyclic structure in a side chain thereof (which may also referred to below as "the polymer") contains propylene as another structural unit, the propylene content of the polymer is less than 50 mass%, preferably 20 mass% or less, and more preferably 10 mass% or less, based on the mass of the polymer taken as 100 mass%.

The polymer having an alicyclic structure in a side chain thereof can be obtained, for example, by polymerizing monomers, each having a structural unit, by a known method. Alternatively, the polymer having an alicyclic structure in a side chain thereof can also be obtained by hydrogenating a polymer having an aromatic ring structure in a side chain thereof. Hydrogenation of a polymer having an aromatic ring structure in a side chain thereof enables a polymer having an alicyclic structure in a side chain thereof to be produced in an industrial, cost-effective manner, and is thus preferable.

When a polymer having an aromatic ring structure in a side chain thereof is hydrogenated, the polymer having an aromatic ring structure in a side chain thereof may be a homopolymer or a copolymer. The copolymer is preferably a block copolymer comprising at least a vinyl aromatic polymer block and a conjugated diene polymer block. The hydrogenation of a polymer having an aromatic ring structure in a side chain thereof produces a hydrogenated block copolymer comprising at least a hydrogenated vinyl aromatic polymer block and a hydrogenated conjugated diene polymer block.

A hydrogenated block copolymer comprising at least a hydrogenated vinyl aromatic polymer block and a hydrogenated conjugated diene polymer block, which is one of the preferred embodiments, is described below.

Hydrogenated Vinyl Aromatic Polymer Block

The hydrogenated vinyl aromatic polymer block comprises a structural unit derived from a vinyl aromatic compound and formed by hydrogenating the vinyl aromatic compound. The hydrogenated vinyl aromatic polymer block contains 50 mass% or more, preferably 80 mass% or more, even more preferably 90 mass% or more, and particularly preferably 100 mass%, of the structural unit derived from a vinyl aromatic compound. By setting the content of the structural unit derived from a vinyl aromatic compound in the hydrogenated vinyl aromatic polymer block to 50 mass% or more, the rigidity and electrical insulation properties in high-temperature environments tend to improve.

Examples of vinyl aromatic compounds include styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, vinyltoluene, 1-vinylnaphthalene, and 2-vinylnaphthalene. The vinyl aromatic compound is preferably selected from styrene and $\alpha$-methylstyrene, and more preferably styrene.

The hydrogenated vinyl aromatic polymer block may be composed of only one, or two or more, of the vinyl aromatic compounds described above.

The hydrogenated vinyl aromatic polymer block may contain structural units other than those derived from a vinyl aromatic compound. Examples of such other structural units include structural units derived from isoprene, butadiene, 2,3-dimethylbutadiene, 1,3-pentadiene, and 1,3-hexadiene.

The hydrogenated vinyl aromatic polymer block content is preferably 50 mass% or more and less than 100 mass%, based on the total of the hydrogenated vinyl aromatic polymer block and the hydrogenated conjugated diene polymer block taken as 100 mass%. When the hydrogenated vinyl aromatic polymer block copolymer content is set to 50 mass% or more, the obtained film readily exhibits high rigidity and electrical insulation properties at high temperatures. The hydrogenated vinyl aromatic polymer block copolymer content is more preferably 60 mass% or more, even more preferably 70 mass% or more, and particularly preferably 80 mass% or more.

Hydrogenated Conjugated Diene Polymer Block

The hydrogenated conjugated diene polymer block includes a structural unit derived from a conjugated diene and obtained by hydrogenating the conjugated diene. The hydrogenated conjugated diene polymer block contains 50 mass% or more, preferably 80 mass% or more, more preferably 90 mass% or more, and particularly preferably 100 mass% of the structural unit derived from a conjugated diene.

Examples of the conjugated diene include butadiene, 2-methyl-1,3-butadiene (isoprene), 2,3-dimethylbutadiene, 1,3-pentadiene, and 1,3-hexadiene. The conjugated diene is preferably selected from butadiene and isoprene, and more preferably butadiene.

The hydrogenated conjugated diene polymer block may comprise a structural unit derived from a conjugated diene having no side chains. Examples of the conjugated diene having no side chains include butadiene, 1,3-pentadiene, and 1,3-hexadiene. The conjugated diene having no side chains is preferably butadiene.

In the hydrogenated conjugated diene polymer block, the bonding configuration of the conjugated diene, i.e., the microstructure, is not particularly limited. For example, the bonding configuration of butadiene can be, for example, 1,2-linkage or 1,4-linkage. The bonding configuration of isoprene can be, for example, 1,2-linkage, 3,4-linkage, or 1,4-linkage. These bonding configurations may be present alone or in a combination of two or more. When two or more bonding configurations are present, the proportion of each bonding configuration is not particularly limited.

The hydrogenated conjugated diene polymer block can contain structural units other than the structural unit derived from conjugated diene. Examples of such other structural units include structural units derived from styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, vinyltoluene, 1-vinylnaphthalene, 2-vinylnaphthalene, or the like.

The content of the hydrogenated conjugated diene polymer block is preferably more than 0 mass% (for example, 1 mass% or more) and 50 mass% or less, based on the total of the hydrogenated vinyl aromatic polymer block and the hydrogenated conjugated diene polymer block taken as 100 mass%. By setting the content of the hydrogenated conjugated diene polymer block to 50 mass% or less, more preferably 40 mass% or less, even more preferably 30 mass% or less, and particularly preferably 20 mass% or less, higher rigidity and electrical insulation properties at high temperatures are readily achieved, thus being preferable.

Degree of Hydrogenation

The degree of hydrogenation of the aromatic ring in the hydrogenated vinyl aromatic polymer block according to the present embodiment is preferably 50 mol% or more, more preferably 80 mol% or more, even more preferably 85 mol% or more, particularly preferably 90 mol% or more, and more particularly preferably 95 mol% or more. The degree of hydrogenation may be 100 mol%. The degree of hydrogenation of carbon-carbon double bonds derived from the conjugated diene in the hydrogenated conjugated diene polymer block is preferably 90 mol% or more, and more preferably 95 mol% or more. The degree of hydrogenation may be 100 mol%.

Setting the degree of hydrogenation of the aromatic rings in the hydrogenated vinyl aromatic polymer block and/or the degree of hydrogenation of carbon-carbon double bonds derived from the conjugated diene in the hydrogenated conjugated diene polymer block to be within the aforementioned range tends to improve stretchability, thus being preferable.

Bonding Configuration of Hydrogenated Block Copolymer

The bonding configuration of the polymer blocks in the hydrogenated block copolymer may be linear, branched, or radial, or a combination thereof.

For example, when the hydrogenated vinyl aromatic polymer block is represented as "X" and the hydrogenated conjugated diene polymer block is represented as "Y," examples of bonding configurations include a diblock copolymer (X-Y), a triblock copolymer (X-Y-X), a tetrablock copolymer (X-Y-X-Y), and a pentablock copolymer (X-Y-X-Y-X or Y-X-Y-X-Y). From the viewpoint of ease of production, the bonding configuration is preferably a diblock copolymer, triblock copolymer, or tetrablock copolymer.

Specific examples of hydrogenated block copolymers include hydrogenated block copolymers obtained by hydrogenation of, for example, a styrene-isoprene diblock copolymer (SI), a styrene-butadiene diblock copolymer (SB), a styrene-isoprene-styrene triblock copolymer (SIS), a styrene-butadiene/isoprene-styrene triblock copolymer (SB/IS), a styrene-butadiene-styrene triblock copolymer (SBS), a styrene-ethylene-butylene-styrene copolymer (SEBS), a styrene-ethylene-propylene-styrene copolymer (SEPS), styrene-ethylene-ethylene-propylene-styrene copolymer (SEEPS), or a styrene-butylene-butadiene-styrene copolymer (SBBS). Among these, the hydrogenated block copolymer obtained by hydrogenating a styrene-butadiene diblock copolymer (SB) is particularly preferred.

Method for Producing Hydrogenated Block Copolymer

The method for producing the hydrogenated block copolymer is not particularly limited and can be a known method, such as the anionic polymerization method.

Specifically, the hydrogenated block copolymer of the present invention can be produced by performing a hydrogenation reaction after performing a polymerization reaction, for example by one of the following methods: a method comprising sequentially polymerizing a vinyl aromatic compound and a conjugated diene by using an alkyl lithium compound as an initiator; a method comprising sequentially polymerizing a vinyl aromatic compound and a conjugated diene by using an alkyl lithium compound as an initiator and then adding a coupling agent to perform coupling; or a method comprising sequentially polymerizing a conjugated diene and then a vinyl aromatic compound by using a dilithium compound as an initiator.

Examples of alkyl lithium compounds include methyl lithium, ethyl lithium, n-butyl lithium, sec-butyl lithium, tert-butyl lithium, and pentyl lithium.

Examples of coupling agents include divinylbenzene; polyvalent epoxy compounds such as epoxidized 1,2-polybutadiene, epoxidized soybean oil, and 1,3-bis(N,N-glycidylaminomethyl)cyclohexane; halogen compounds such as dimethyldichlorosilane, dimethyldibromosilane, trichlorosilane, methyltrichlorosilane, tetrachlorosilane, and tetrachlorotin; ester compounds such as methyl benzoate, ethyl benzoate, phenyl benzoate, diethyl oxalate, diethyl malonate, diethyl adipate, dioctyl adipate, dimethyl phthalate, diethyl phthalate, dimethyl isophthalate, and dimethyl terephthalate; carbonate ester compounds such as dimethyl carbonate, diethyl carbonate, and diphenyl carbonate; and alkoxysilane compounds such as dimethyldimethoxysilane, methyltrimethoxysilane, methyltriethoxysilane, tetramethoxysilane, tetraethoxysilane, bis(trimethoxysilyl)hexane, and bis(triethoxysilyl)ethane.

Examples of dilithium compounds include naphthalene dilithium and dilithiohexylbenzene.

The polymerization reaction is preferably carried out in the presence of a solvent. The solvent is not particularly limited as long as it is inert to the initiator and does not adversely affect the reaction. Examples include saturated aliphatic hydrocarbons such as hexane, cyclohexane, heptane, octane, and decane; and aromatic hydrocarbons such as toluene, benzene, and xylene. From the viewpoint of controlling the microstructure, in general, the polymerization reaction temperature is preferably in the range of 0 to 100°C, more preferably 30 to 90°C, even more preferably 40 to 80°C, and particularly preferably 50 to 80°C. From the viewpoint of controlling the microstructure, the polymerization reaction time is preferably 0.5 to 50 hours.

In the polymerization reaction, a Lewis base may also be used as a co-catalyst. Examples of Lewis bases include ethers such as dimethyl ether, diethyl ether, and tetrahydrofuran; glycol ethers such as ethylene glycol dimethyl ether and diethylene glycol dimethyl ether; and amines such as triethylamine, N,N,N',N'-tetramethylethylenediamine, and N-methylmorpholine. These Lewis bases may be used alone or in a combination of two or more.

The hydrogenation reaction may be carried out either immediately after the polymerization reaction, or after the block copolymer is isolated after the polymerization reaction.

When the block copolymer is to be isolated once after performing the polymerization reaction, the isolation can be performed, for example, by pouring a polymerization solution obtained by the polymerization reaction into a solvent in which a block copolymer is poorly soluble, such as methanol, to thereby solidify the block copolymer, or by pouring the polymerization solution into hot water together with steam to remove the solvent by azeotropic distillation (steam stripping), followed by drying.

The hydrogenation reaction of the block copolymer can be carried out, for example, by allowing the reaction to proceed in the presence of a hydrogenation catalyst at a reaction temperature of 20 to 200°C and at a hydrogen pressure of 0.1 to 20 MPa for 0.1 to 100 hours.

Examples of hydrogenation catalysts include Raney nickel; heterogeneous catalysts in which metals such as platinum (Pt), palladium (Pd), ruthenium (Ru), rhodium (Rh), and nickel (Ni) are supported on carriers such as carbon, alumina, or diatomaceous earth; Ziegler-type catalysts composed of combinations of a transition metal compound (such as nickel octanoate, nickel naphthenate, nickel acetylacetonate, cobalt octanoate, cobalt naphthenate, or cobalt acetylacetonate) with an organoaluminum compound, such as triethylaluminum or triisobutylaluminum, or an organolithium compound; and metallocene-based catalysts composed of a bis(cyclopentadienyl) compound of a transition metal, such as titanium, zirconium, and hafnium, in combination with an organometallic compound composed of, for example, lithium, sodium, potassium, aluminum, zinc, or magnesium.

When the hydrogenation reaction is carried out immediately after the polymerization reaction, isolation of the hydrogenated block copolymer can be performed by pouring the hydrogenation reaction mixture into a solvent in which a hydrogenated block copolymer is poorly soluble, such as methanol, to thereby solidify the block copolymer or by pouring the reaction mixture into hot water together with steam to remove the solvent by azeotropic distillation (steam stripping), followed by drying.

The polymer with an alicyclic structure in a side chain thereof contained in the layer A of the present invention preferably has a glass transition temperature (Tg) of 100°C or more and 180°C or less. By setting the glass transition temperature to 100°C or higher, higher rigidity and electrical insulation properties at high temperatures are more readily achieved. By setting the glass transition temperature to 180°C or lower, improved stretchability can be achieved. The glass transition temperature is more preferably 120°C or more and 165°C or less, even more preferably 130°C or more and 160°C or less, and particularly preferably 140°C or more and 155°C or less.

The polymer with an alicyclic structure in a side chain thereof contained in the layer A preferably has a Vicat softening point (1 kg, 50°C/hr) of 100°C or more and 170°C or less. By setting the Vicat softening point to 100°C or higher, improved rigidity and electrical insulation properties at high temperatures are readily achieved. By setting the Vicat softening point to 170°C or lower, stretchability can be improved. The Vicat softening point is more preferably 120°C or more and 165°C or less, even more preferably 130°C or more and 160°C or less, and particularly preferably 140°C or more and 155°C or less.

The glass transition temperature (Tg) and Vicat softening point of the polymer with an alicyclic structure in a side chain thereof contained in the layer A can be adjusted by changing the kind of structural unit of the polymer having an alicyclic structure in a side chain thereof, or the kinds and mixing ratio of one or more other structural units.

The weight average molecular weight (Mw) of the polymer with an alicyclic structure in a side chain thereof contained in the layer A is not particularly limited, but is preferably 50,000 or more and 400,000 or less. When the layer A contains a polymer having an alicyclic structure with such a weight average molecular weight (Mw), the rigidity, electrical insulation properties, and stretchability of the stretched film of the present invention tend to be improved.

The polymer with an alicyclic structure in a side chain thereof contained in the layer A preferably has a melt mass flow rate (MFR) of 1 g/10 min or more and 40 g/10 min or less, more preferably 2 g/10 min or more and 20 g/10 min or less, and even more preferably 3 g/10 min or more and 15 g/10 min or less, as measured at 260°C under a load of 2.16 kg. In this case, appropriate resin flowability can be obtained during film stretching, and stretchability tends to improve.

The polymer with an alicyclic structure in a side chain thereof contained in layer A may be produced by the method described above or may be a commercially available product. Examples of commercially available products include ViviOn® (produced by USI Corporation).

1-3. <u>Layer A</u>

The present invention comprises a layer A which, based on 100 mass% of the layer A, contains 55 mass% or more and 99 mass% or less of a polypropylene-based resin and 1 mass% or more and 45 mass% or less of a polymer having an alicyclic structure in a side chain thereof. The layer A is stretched in at least one direction.

The layer A may further contain other resins for the purpose of adjusting various physical properties, such as low-temperature impact resistance of the film, surface roughness, rigidity, strength, and elongation, as well as improving the compatibility between the polypropylene-based resin and the polymer having an alicyclic structure in a side chain thereof, and adjusting stretchability.

The amount of other resins added is preferably 20 mass% or less, more preferably 10 mass% or less, and even more preferably 5 mass% or less, based on the mass of the layer A taken as 100 mass%. Such other resins are not particularly limited, and conventionally known resins that are suitable for use in stretched film applications can also be appropriately used in the present invention. Examples include polyolefin-based resins such as polyethylene, poly(1-butene), polyisobutene, poly(1-pentene), and poly(4-methyl-1-pentene), and copolymer resins thereof, such as ethylene-propylene copolymers, propylene-butene copolymers, ethylene-butene copolymers, and ethylene-(4-methyl-1-pentene) copolymers, and like copolymers of α-olefins. Further, other examples include polystyrene-based resins, elastomers, polyvinyl-based resins, polyester-based resins, polyurethane-based resins, nylon-based resins, and copolymers thereof.

When such other resins are copolymers containing propylene, the propylene content is less than 50 mass% (for example, 40 mass% or less), preferably 20 mass% or less, and more preferably 10 mass% or less, based on the mass of the other resins taken as 100 mass%.

Such other resins may be commercially available products. Commercially available products of the copolymer of α-olefins include, for example, Tafmer® (produced by Mitsui Chemicals, Inc.), and can be suitably used for the aforementioned purpose.

The layer A may further contain particles such as inorganic particles and organic particles, either alone or in a combination of two or more. The particles contained in the layer A adjust the coefficient of friction and surface roughness when the film is formed into a stretched film, and enable a good film roll without wrinkles etc. to be obtained. Further, when the stretched film is used in capacitor applications, its electrical properties (self-healing capability) can be improved.

Preferable examples of inorganic particles include, but are not limited to, particles of metal oxides such as titanium oxide, zinc oxide, aluminum oxide, and magnesium oxide, as well as silicon compounds such as silica. Other examples of inorganic particles include particles of light calcium carbonate, heavy calcium carbonate, kaolin, calcined kaolin, talc, calcium sulfate, barium sulfate, zinc sulfide, zinc carbonate, satin white, aluminum silicate, diatomaceous earth, calcium silicate, magnesium silicate, alumina, colloidal alumina, boehmite, pseudo-boehmite, aluminum hydroxide, magnesium carbonate, magnesium hydroxide, zeolite, and smectite. Examples of organic particles include resin particles composed of crosslinkable resins and silicone resin particles.

The average particle diameter is, for example, 0.05 μm or more and 2.0 μm or less. The average particle diameter is preferably 0.1 μm or more and 1.5 μm or less, and more preferably 0.4 μm or more and 1.2 μm or less. The average particle diameters of the inorganic particles and organic particles are measured by the method described in the Examples described below.

The particles may be commercially available particles, such as SEAHOSTAR® (produced by Nippon Shokubai Co., Ltd.), and can be suitably used for the aforementioned purpose.

The particle content is, for example, 0.1 mass% or more and 2.0 mass% or less, preferably 0.2 mass% or more and 1.5 mass% or less, and more preferably 0.3 mass% or more and 1.2 mass% or less, based on the mass of the layer A taken as 100 mass%.

The layer A may further contain an antioxidant. Antioxidants are mainly used for the following two purposes. One purpose is to prevent thermal degradation and oxidative degradation of the resin within the film-forming extruder and/or the melt-kneading machine. Another purpose is to suppress the deterioration of physical properties, such as strength due to degradation during long-term use of the stretched film. An example of the latter is contribution to the suppression of deterioration during long-term use and the maintenance of electrical characteristics of capacitors when the film is used in capacitor applications. An antioxidant that mainly contributes to the former purpose is also referred to as a "primary agent," whereas an antioxidant that mainly contributes to the latter purpose is also referred to as a "secondary agent." For these two purposes, two or more antioxidants may be used, or one antioxidant may be used for the two purposes.

The primary agent can be, for example, 2,6-di-tert-butyl-p-cresol (commonly known as BHT). Most of this antioxidant is oxidized, decomposed, or volatilized within the extruder, and the antioxidant thus scarcely remains in a stretched film after the stretched film is formed. Therefore, when the layer A after stretching contains BHT, its content is usually less than 100 ppm by mass, based on the mass of the layer A taken as 100%.

Examples of the secondary agent include hindered phenol-based antioxidants containing a carbonyl group. Among the hindered phenolic antioxidants, examples of hindered phenolic antioxidants containing a carbonyl group include triethylene glycol bis[3-(3-tert-butyl-5-methyl-4-hydroxyphenyl)propionate] (trade name: Irganox 245), 1,6-hexanediol bis[3-(3,5-di-tert-butyl-4-hydroxyphenyl)propionate] (trade name: Irganox 259), pentaerythritol tetrakis[3-(3,5-di-tert-butyl-4-hydroxyphenyl)propionate] (trade name: Irganox 1010), 2,2-thiodiethylene bis[3-(3,5-di-tert-butyl-4-hydroxyphenyl)propionate] (trade name: Irganox 1035), octadecyl 3-(3,5-di-tert-butyl-4-hydroxyphenyl)propionate (trade name: Irganox 1076), and N,N'-hexamethylene bis(3,5-di-tert-butyl-4-hydroxyhydrocinnamide) (trade name: Irganox 1098). Among these, pentaerythritol tetrakis[3-(3,5-di-tert-butyl-4-hydroxyphenyl)propionate], which has excellent heat resistance, is particularly preferred. (All Irganox® (trade name) products mentioned herein are produced by BASF Japan Ltd.)

When the layer A contains one or more hindered phenolic antioxidants, the total content thereof is preferably 1,000 ppm by mass and more and 7,000 ppm by mass or less, and more preferably 2,000 ppm by mass or more and 6,000 ppm by mass or less, based on the total mass of the layer A taken as 100%, in view of achieving the desired effects. It should be noted that some quantity of the hindered phenolic antioxidant is oxidized and decomposed during the extrusion step in the production of a stretched film, and that the residual amount of the hindered phenolic antioxidant in the obtained stretched film is generally 60 to 80 mass% of the content mentioned above.

The layer A can further contain additives. Examples of additives include nucleating agents, chlorine absorbers, lubricants, plasticizers, flame retardants, and colorants. The additive content of the layer A is, for example, 0 mass% or more and 10 mass% or less, 0 mass% or more and 5 mass% or less, 0 mass% or more and 1 mass% or less, 0 mass% or more and 0.5 mass% or less, or 0 mass% or more and 0.1 mass% or less. The substantial lower limit is, for example, about 0.01 mass%.

The thickness of the layer A of the present invention is not particularly limited. The preferred thickness varies depending on the application. For example, in packaging applications or separator applications, the thickness is, for example, preferably 5 μm or more and 80 μm or less, and more preferably 10 μm or more and 50 μm. In capacitor applications, a thinner material is preferred from the viewpoint of reducing the capacitor's volume while increasing its capacitance. From this viewpoint, the thickness is preferably 10 μm or less, more preferably 9 μm or less, even more preferably 8 μm or less, still even more preferably 6 μm or less, particularly preferably 5 μm or less, more particularly preferably 4 μm or less, and still more particularly preferably 3 μm or less. In view of stretchability and the metal vapor deposition step, the thickness after stretching is, for example, 1 μm or more, preferably 1.5 μm or more, more preferably 1.8 μm or more, even more preferably 2 μm or more, and still even more preferably 2.2 μm or more.

1-4. <u>Stretched Film</u>

The stretched film of the present invention comprises a layer A which contains 55 mass% or more and 99 mass% or less of a polypropylene-based resin and 1 mass% or more and 45 mass% or less of a polymer with an alicyclic structure in a side chain thereof, based on the mass of the layer A taken as 100 mass%, the layer A being stretched in at least one direction.

The stretched film of the present invention may be a single-layer stretched film composed of the layer A, or may be a multilayer film obtained by stacking multiple layers and/or films by one or more known methods, such as co-extrusion, lamination, heat sealing, coating, or like methods. Lamination may be performed either before or after stretching the layer **A.**

The multilayer film can have various layer structures, such as a three-layer structure comprising a surface layer (skin layer: layer b) and a core layer (layer a), represented as layer b/layer a/layer **b;** a three-layer structure with one surface layer replaced by another layer (layer c), represented as layer b/layer a/layer **c;** a four-layer structure with the core layer doubled, represented as layer b/layer a/layer a/layer **c;** a four-layer structure with one core layer replaced by another core layer (layer a'), represented as layer b/layer a/layer a'/layer **c;** or a structure further comprising intermediate layers, such as layer b/layer d/layer a/layer d/layer b. Further, the film may have a two or more layered structure in which two or more layers a are stacked, or may be a so-called ultra-multilayer film, including a laminated structure in which ten or more layers a are stacked. The layers to be stacked may be composed of different resins or may be composed of the same resin.

The layer A of the present invention can be used as any of layer a, layer a', layer b, layer c, layer d, and the like. For example, when used as a surface layer, the layer A tends to exhibit excellent stretchability. When used as a core layer, the layer A tends to exhibit excellent rigidity and insulation properties at high temperatures.

To more readily achieve the effects of the present invention, the thickness ratio of the layer A to the stretched film of the present invention is preferably 50% or more, more preferably 60% or more, even more preferably 70% or more, and most preferably 80% or more, based on the total stretched film thickness taken as 100%.

When the layer A of the present invention is used as a core layer, a preferred example of a surface layer to be stacked is a layer containing a polypropylene-based resin as a main component and further containing a pigment. The polypropylene-based resin and pigment may be the same as those used in the layer **A.**

The preferred layer structure varies depending on the application of the obtained film. For example, in packaging applications or separator applications, two or more layers are preferable from the viewpoint of functional separation between the core layer and the skin layer. In capacitor applications, a single layer is preferable from the viewpoint of reducing thickness, whereas two or more layers are preferable from the viewpoint of electrical insulation properties.

Specific examples of the co-extrusion method include the pre-die lamination method, in which molten resins are brought into contact with each other within the feed block before the die; the in-die lamination method, in which resins are brought into contact with each other in the flow path inside the die; and the post-die lamination method, in which resins are discharged from multiple concentric lips and brought into contact with each other. For example, in the case of the in-die lamination method, a multilayer die, such as a three-layer multi-manifold die, can be used.

The thickness of the stretched film of the present invention is not particularly limited. The preferred thickness varies depending on the application. For example, in packaging applications and separator applications, the thickness is

preferably 5 μm or more and 80 μm or less, and more preferably 10 μm or more and 50 μm or less. In capacitor applications, a thinner film is preferred to reduce the volume of the capacitor and improve capacitance. From this viewpoint, the thickness is preferably 10 μm or less, more preferably 9 μm or less, even more preferably 8 μm or less, still even more preferably 6 μm or less, particularly preferably 5 μm or less, more particularly preferably 4 μm or less, and especially preferably 3 μm or less. In view of stretchability and the metal vapor deposition step, the thickness after stretching is preferably 1 μm or more, more preferably 1.5 μm or more, even more preferably 1.8 μm or more, still more preferably 2 μm or more, and still even more preferably 2.2 μm or more.

The thickness of the film of the present invention, such as the unstretched film of the present invention and the biaxially stretched film of the present invention, is measured using an outside micrometer (High-precision Digimatic Micrometer MDH-25MB, produced by Mitutoyo Corporation) in accordance with Method A of JIS K 7130:1999.

The stretched film of the present invention exhibits high dielectric breakdown strength at high-temperatures. The dielectric breakdown strength is measured at 120°C and 135°C in accordance with the method described in the Examples below.

The dielectric breakdown strength of the stretched film of the present invention in a 120°C environment is preferably 450 $V_{DC}$/μm or more, more preferably 470 $V_{DC}$/μm or more, even more preferably 490 $V_{DC}$/μm or more, particularly preferably 500 $V_{DC}$/μm or more, and more particularly preferably 510 $V_{DC}$/μm or more. The upper limit of the dielectric breakdown strength at each temperature mentioned above is not particularly limited, and is, for example, 700 $V_{DC}$/μm or less, or 650 $V_{DC}$/μm or less.

The dielectric breakdown strength of the film of the present invention in a 135°C environment is preferably 420 $V_{DC}$/μm or more, more preferably 440 $V_{DC}$/μm or more, even more preferably 460 $V_{DC}$/μm or more, particularly preferably 480 $V_{DC}$/μm or more, and more particularly preferably 490 $V_{DC}$/μm or more. The upper limit of the dielectric breakdown strength at each temperature mentioned above is not particularly restricted, and is, for example, 650 $V_{DC}$/μm or less, or 600 $V_{DC}$/μm or less.

The stretched film of the present invention is preferred because the change in dielectric breakdown strength due to an increase of temperature is small. The insulation strength retention (%), which is defined as a ratio of the dielectric breakdown strength in a 135°C environment to the dielectric breakdown strength in a 120°C environment (dielectric breakdown strength in a 135°C environment/dielectric breakdown strength in a 120°C environment), is preferably 87% or more, more preferably 88% or more, even more preferably 89% or more, and still even more preferably 90% or more. The upper limit is not particularly restricted and is, for example, 100%, 99%, or 98%. The load related to dielectric breakdown strength differs significantly between environments of 120°C and 135°C. Accordingly, ordinary polypropylene film exhibits a lower insulation strength retention (%), resulting in reduced temperature stability of electrical characteristics of capacitors produced using the film, thus being undesirable. In the stretched film of the present invention, the change in dielectric breakdown strength with an increase in temperature is suppressed from a 120°C environment to a 135°C environment, and capacitors produced using the stretched film exhibit improved temperature stability of electrical characteristics, thus being preferable.

The rigidity of the stretched film of the present invention in high-temperature environments is represented by the elongation measured using a thermo-mechanical analyzer (TMA) according to the method described in the Examples below. It is preferable for the change in rigidity of the stretched film that occurs with an increase of temperature from room temperature to 130°C to be small. The elongation is preferably 4.5% or less, more preferably 4% or less, even more preferably 3.5% or less, and particularly preferably 3% or less. By setting the elongation to 5% or less, the rigidity of the stretched film at high temperatures is maintained at a high level. Further, the film with such an elongation also exhibits excellent electrical insulation properties at high temperatures, and capacitors produced using the film exhibit improved temperature stability of the electrical characteristics, thus being preferable. The lower limit of the elongation is, for example, 0.2% or more, 0.5% or more, or 1% or more. By setting the elongation to 0.2% or more, the stretchability of the film tends to improve.

The stretched film of the present invention exhibits high adaptability for subsequent processing steps. When the stretched film of the present invention is used for capacitor applications, the subsequent processing steps are mainly a vapor deposition step for laminating a metal layer. The adaptability for the vapor deposition step is measured according to the method described in the Examples below. The stretched film of the present invention can undergo vapor deposition without film breakage even at a high vapor deposition rate of, for example, 150 m/min.

The applications of the stretched film of the present invention are not particularly limited. For example, by taking advantage of its thermal resistance, the film of the present invention can be used as a packaging film or separator with excellent heat resistance. Further, the stretched film of the present invention can be suitably used as a film for capacitors. In particular, the stretched film of the present invention is used for capacitors that are operated in a high-temperature environment of 120°C or higher, and can be highly suitably used for compact, and further high-capacity (for example, 5 μF or more, preferably 10 μF or more, and more preferably 20 μF or more) capacitors.

1-5. Method for Producing Stretched Film

The raw materials of the stretched film of the present invention (including at least the polypropylene-based resin and the polymer having an alicyclic structure in a side chain thereof described above) are used after being dried if the moisture content is high. The drying conditions are not particularly limited and are, for example, 70 to 150°C, and preferably 80 to 130°C. The drying time can be appropriately adjusted according to the drying temperature and is, for example, 2 to 30 hours, and preferably 3 to 20 hours.

The raw materials may be individually fed into a film-forming extruder and mixed within the film-forming extruder, or may be mixed before being fed into the film-forming extruder and then placed into the film-forming extruder as a raw material mixture.

Examples of the method for mixing raw materials to prepare a raw material mixture include, but are not limited to, a method of dry-blending lumps (e.g., pellets) of multiple resins by using a mixer etc.

The mixing method can be, for example, melt blending. Melt blending is preferable because uniform kneading of the resin tends to improve the rigidity, electrical insulation properties, stretchability, etc., of the stretched film.

As the melt kneading method, a single-screw melt kneader, a twin-screw melt kneader, or a multi-screw melt kneader with more than two screws can be used. Among these, a twin-screw melt kneader is suitably used due to its higher effect of improving the rigidity, electrical insulation properties, stretchability, etc. of the stretched film. In the case of twin-screw types, although kneaders of a co-rotation type and those of a counter-rotation type are both usable, co-rotation is preferred from the viewpoint of suppressing resin deterioration. The ratio of screw length to diameter (L/D) in the melt kneader is preferably 20 or more, more preferably 25 or more, and even more preferably 28 or more. By setting the L/D ratio to 20 or more, the resin is well mixed, resulting in improved rigidity, electrical insulation properties, and stretchability of the stretched film. Although there is no upper limit on L/D, L/D is 80 or less, and preferably 50 or less, from the viewpoint of suppressing resin deterioration.

The temperature during melt kneading is preferably 200°C to 300°C, and more preferably 220°C to 280°C from the viewpoint of balancing the suppression of resin deterioration and kneadability. During melt blending, it is preferable to purge the kneader with an inert gas, such as nitrogen, in order to suppress resin deterioration.

The raw material and/or raw material mixture of the present invention is supplied to a film-forming extruder and extrusion-molded. The method for extruding the resin composition of the present invention is not particularly limited, and known extrusion methods can be used. For example, after the raw materials or the resin composition of the present invention in a solid form supplied into a film-forming extruder is heated and mixed in a molten state by a screw, the resulting mixture is filtered through a filter, extruded through a single-layer T-die into a film shape, and brought into contact with a cooling roll set to a predetermined surface temperature to form a film by solidification, thereby obtaining an unstretched film of the present invention.

Examples of film-forming extruders include single-screw types, twin-screw types, and multi-screw types having three or more screws. In the case of two or more screws, examples of screw rotation types include co-rotation and counter-rotation. The melting temperature is preferably 200 to 300°C, more preferably 230 to 280°C, and even more preferably 240 to 275°C. This allows the resin to be appropriately kneaded, and the properties of the stretched film, such as rigidity, electrical insulation properties, and stretchability, tend to improve. To prevent resin deterioration during melt extrusion, it is preferable to purge the extruder with an inert gas, such as nitrogen.

The filtration accuracy of the filter for filtering the resin composition of the present invention in a molten state is not particularly limited, and is, for example, 2 to 30 $\mu$m, preferably 5 to 25 $\mu$m, and more preferably 10 to 25 $\mu$m.

The temperature of the die is not particularly limited, and is preferably 200 to 300°C, more preferably 210 to 280°C, even more preferably 215 to 270°C, and still even more preferably 220 to 260°C.

The adhesion method when the resin of the present invention extruded from the die and in a molten state is solidified by being brought into contact with a cooling roll is not particularly limited. Examples include air knife, electrostatic pinning, elastic roll nip, metal roll nip, elastic metal roll nip, and the like. The surface temperature of the cooling roll is, for example, 30 to 130°C, preferably 35 to 120°C, and more preferably 40 to 110°C.

The draft ratio when the resin of the present invention extruded from the die and in a molten state is brought into contact with the cooling roll is preferably in the range of 1 to 20, more preferably 1.1 to 16, even more preferably 1.2 to 10, and still even more preferably 1.3 to 8. Setting the draft ratio to the above specified range allows the orientation of the stretched film in the longitudinal direction to be within an appropriate range, thereby improving stretchability. The draft ratio is calculated according to the following formula from the density d (g/cm$^3$) of the molten resin, the width W (cm) of the die lip outlet, the average slit gap t (cm) at the die lip outlet, the resin discharge rate Q (g/min), and the peripheral velocity V (cm/min) of the cooled molding roll.

$$\text{Draft ratio} = dVWt/Q$$

The thickness of the unstretched film of the present invention is not particularly limited, and is, for example, 20 to 300 $\mu$m.

The method for stretching the unstretched film of the present invention is not particularly limited and can be a known stretching method. Examples of methods for stretching the unstretched film of the present invention include, but are not limited to, a method of longitudinal stretching (machine direction, MD) by heating the film with heated rolls (longitudinal uniaxial roll stretching method); a method of transverse stretching (transverse direction, TD) by heating the film in an oven at a predetermined temperature (commonly referred to as a tenter) (transverse uniaxial stretching method); a method comprising performing transverse uniaxial stretching after longitudinal uniaxial roll stretching (sequential biaxial stretching method); a method comprising performing transverse uniaxial stretching after longitudinal uniaxial roll stretching, followed by additional longitudinal stretching (roll or tenter method) (multistage sequential biaxial stretching); a method comprising sequentially performing longitudinal stretching and transverse stretching within a tenter at a predetermined temperature (tenter-type sequential biaxial stretching); and a method comprising simultaneously performing longitudinal stretching and transverse stretching within a tenter (simultaneous biaxial stretching). As the method for stretching the unstretched film of the present invention, a method in which transverse uniaxial stretching is performed after longitudinal uniaxial roll stretching (the sequential biaxial stretching method) is preferred because it imparts excellent rigidity, electrical insulation properties, stretchability, etc. to the stretched film.

In the longitudinal uniaxial roll stretching method, multiple heated rolls can be used. The stretch point may be only one location, or two or more locations. The temperature ($T_{MD}$) of the roll immediately before stretching (pre-stretching roll) in the case of one stretch point, and the surface temperature ($T_{MD}$) of the pre-stretching roll at the point with the maximum stretching ratio in the case of two or more stretch points is preferably 125°C or more and 175°C or less, more preferably 130°C or more and 170°C or less, even more preferably 135°C and more 168°C or less, and particularly preferably 140°C or more and 166°C or less. The longitudinal stretching ratio (in the case of two or more stretch points, the product of stretching ratios at the two or more stretch points) is preferably 1.5 times or more and 5.0 times or less, more preferably 2.0 times or more and 4.6 times or less, and even more preferably 2.2 times or more and 4.2 times or less. By setting the temperature and stretching ratio within the above specified ranges, longitudinal orientation can be appropriately suppressed, and a stretched film with excellent rigidity, electrical insulation properties, and stretchability is more readily obtained.

The tenter used in the present invention is preferably a tenter having three or more temperature zones to allow individual steps, such as a heating, stretching, and other treatments described below, such as heating, relaxation, and cooling, to be performed at different temperatures. A tenter with five or more temperature zones is more preferred.

When longitudinal stretching is performed within the tenter, the oven temperature during the stretching ($T_{MD}$) is preferably 125°C or more and 175°C or less, more preferably 130°C or more and 170°C or less, even more preferably 135°C or more and 168°C or less, and particularly preferably 140°C or more and 166°C or less. The longitudinal stretching ratio is preferably 1.5 times or more and 5.0 times or less, more preferably 2.0 times or more and 4.6 times or less, and even more preferably 2.2 times or more and 4.2 times or less.

When transverse stretching is performed within the tenter, the oven temperature during stretching ($T_{MD}$) is preferably 140°C or more and 175°C or less, more preferably 145°C or more and 170°C or less, more preferably 150°C or more and 168°C or less, and particularly preferably 155°C or more and 166°C or less. The transverse stretching ratio is preferably 5.0 times or more and 11.0 times or less, more preferably 6.0 times or more and 10.0 times or less, and even more preferably 7.0 or more and 9.5 times or less. Setting the oven temperature and the stretching ratio within the above specified ranges suppresses transverse orientation to be within an appropriate range, and a stretched film with excellent rigidity, electrical insulation properties, and stretchability is more readily obtained.

The aforementioned stretching temperatures ($T_{MD}$ and $T_{TD}$) are more preferably adjusted according to the glass transition temperature (Tg) of the polymer with an alicyclic structure in a side chain thereof contained in the layer A of the present invention. $T_{MD}$ is preferably Tg-10°C or higher and Tg+25°C or lower, more preferably Tg-5°C or higher and Tg+20°C or lower, and even more preferably Tg or higher to Tg+16°C or lower. $T_{TD}$ is preferably Tg or higher and Tg+30°C or lower, more preferably Tg+5°C or higher and Tg+28°C or lower, and even more preferably Tg+10°C or higher and Tg+25°C or lower. Setting the temperature within the above specified range suppresses the orientation of the stretched film to be within an appropriate range, and a stretched film with excellent rigidity, electrical insulation properties, and stretchability is more readily obtained.

For example, when the aforementioned stretching temperatures ($T_{MD}$ and $T_{TD}$) are below the above specified ranges, or when the resin exhibits poor kneadability during blending or extrusion, or when the draft ratio during extrusion molding is inappropriate, pores may form within the layer A during stretching. The formation of many pores tends to reduce rigidity, electrical insulation properties, and stretchability of the stretched film.

Since the formation of many pores tends to reduce the total light transmittance of the stretched film, it is preferable for the total light transmittance of the stretched film of the present invention to be 80% or higher, more preferably 85% or higher, even more preferably 88% or higher, and particularly preferably 90% or higher. From the viewpoint of electrical properties (safety) of capacitors, the total light transmittance is preferably 99% or less, more preferably 98% or less, even more preferably 97% or less, and particularly preferably 96% or less.

The product of the longitudinal stretching ratio and the transverse stretching ratio of the stretched film (in the case of preforming the relaxation treatment described below, the longitudinal stretching ratio and the transverse stretching ratio before relaxation are used for the calculation) is preferably 15 times or more and 48 times or less, more preferably 17 times or more and 42 times or less, even more preferably 19 times or more and 38 times or less, particularly preferably 21 times or more and less than 35 times, and particularly preferably 22 times or more and 34 times or less. By setting the temperature and stretching ratios within the above specified ranges, a stretched film with excellent rigidity, electrical insulation properties, stretchability, etc. is more readily obtained.

Stretched films with an expansion area ratio of 12% or less, as well as unstretched films (with an area expansion ratio of 1%) tend to have reduced rigidity and electrical insulation properties. When the area expansion ratio at which the film can be elongated without breaking is 12% or less, its stretchability cannot be considered to be very good.

The stretched film of the present invention may undergo a relaxation treatment (a treatment for reducing the stretching ratio by, for example, up to 20% of the stretching ratio after stretching), heating treatment, and/or cooling treatment. These treatments can be carried out independently or in combination; for example, relaxation and heating treatment can be performed simultaneously, or relaxation and cooling treatment can be performed simultaneously. By appropriately implementing the relaxation treatment, heating treatment, and cooling treatment, for example, the flatness of the stretched film, its dimensional stability against temperature changes, and adaptability for a vapor deposition step can be improved.

The relaxation in the transverse direction is preferably 3% or more and 20% or less, more preferably 5% or more and 16% or less, and even more preferably 6.5% or more and 14% or less, relative to the maximum transverse stretching ratio.

The heating treatment temperature is preferably 150°C or more and 180°C or less, more preferably 155°C or more and 175°C or less, and even more preferably 160°C or more and 172°C or less. The heating treatment time is preferably 1 second or longer and 20 seconds or shorter, and more preferably 2 seconds or longer and 15 seconds or shorter.

The stretched film of the present invention may be subjected to corona treatment, antistatic treatment, heating treatment, or like treatment. Proper implementation of treatments such as corona treatment, antistatic treatment, and heating treatment can improve adaptability for a vapor deposition step. The heating treatment temperature is preferably 20°C or higher and 80°C or lower, more preferably 25°C or higher and 60°C or lower, and even more preferably 30°C or higher and 55°C or lower. The heating treatment time is preferably 3 hours or more and 50 hours or less, and more preferably 6 hours or more and 30 hours or less.

## 2. Metal-laminated film

In one aspect, the present invention relates to a metal-laminated film comprising the stretched film of the present invention and a metal layer laminated on one or both surfaces of the stretched film (which may be referred to herein as "the metal-laminated film of the present invention"). This is described below.

The stretched film of the present invention may have a metal layer on one or both sides thereof, for example, to adjust the permeability of gases such as oxygen and water vapor when used as a packaging film, or as an electrode when used as a capacitor.

Examples of the method for laminating a metal layer on the surface of the stretched film of the present invention include vacuum plating, such as metal vapor deposition or sputtering, coating and drying of a metal-containing paste, and crimping of metal foil or metal powder. In particular, from the viewpoint of productivity, economy, etc., a vacuum deposition method and a sputtering method are preferable, and a vacuum deposition method is more preferable. Examples of the vacuum deposition method include a crucible method and a wire method; however, the method is not particularly limited, and an optimal method can be appropriately selected.

The metal used in the metal layer can be, for example, an elemental metal, such as zinc, lead, silver, chromium, aluminum, copper, or nickel, or a mixture of two or more of these metals, or an alloy thereof. In consideration of the environment, economy, performance, etc., at least one of zinc and aluminum is preferable.

The film resistance of the metal layer is preferably about 0.5 to 10 $\Omega/\square$ from the viewpoint of permeability of gases such as oxygen and water vapor, and about 1 to 60 $\Omega/\square$ from the viewpoint of the electrical properties of the capacitor. From the viewpoint of the electrical properties of the capacitor, in order to exhibit self-healing (self-repairing) properties, the film resistance is more preferably 5 $\Omega/\square$ or more, and even more preferably 10 $\Omega/\square$ or more; and from the viewpoint of safety as a capacitor, the film resistance is more preferably 50 $\Omega/\square$ or less, and even more preferably 30 $\Omega/\square$ or less.

When an electrode (metal vapor-deposited film) is formed by a vacuum deposition method, the film resistance can be measured during vapor deposition by, for example, a non-contact eddy current method or light transmittance method known by one skilled in the art. The film resistance of the metal vapor-deposited film can be adjusted, for example, by adjusting the output of the evaporation source to adjust the amount of evaporation.

In capacitor applications, when the metal vapor-deposited film is formed on one surface of the stretched film, an insulation margin (longitudinal margin) of a predetermined width where no metal is laminated is formed so that it becomes an insulation portion when the film is wound to form a capacitor.

Further, to strengthen the bond between the metal layer of the metal layer-integrated film and the metallikon electrode, it is preferable to form a heavy edge portion. The film resistance of the heavy edge portion is generally about 1 to 8 $\Omega/\square$, and preferably about 1 to 5 $\Omega/\square$. The thickness of the metal film of the heavy edge portion is not particularly limited, and is preferably 1 to 200 nm.

In capacitor applications, the vapor deposition pattern (fuse pattern) of the metal vapor-deposited film to be formed is not particularly limited. From the viewpoint of improving properties such as the safety of the capacitor, it is preferable to form fuses by pattern vapor deposition, such as a fishnet pattern or a T-margin pattern. Forming a metal-vapor deposited film with a vapor deposition pattern including fuses on at least one surface of the stretched film of the present invention is preferable because it improves the safety of the obtained capacitor and is also effective in preventing, for example, breakdown and short circuit of the capacitor.

The method for forming a fuse or the insulation margin described above can be any known method with no restrictions, such as a tape method in which masking is done with tape during vapor deposition and an oil method in which masking is done by applying oil.

A protective agent may be applied to the metal-laminated film of the present invention, for the purpose of physical protection, moisture absorption prevention, oxidation prevention, etc. of the metal layer. Silicone oil, fluorine oil, or the like can be preferably used as the protective agent. The protective agent may be provided as a layer on the metal layer or the metal layer may be impregnated with the protective agent.

The metal-laminated film of the present invention can be processed into the capacitor of the present invention described below. The metal-laminated film of the present invention can also be used for, for example, packaging applications etc. as a barrier film for oxygen and other gases, and the like.

3. <u>Film Capacitor</u>

In one aspect, the present invention relates to a film capacitor comprising the stretched film of the present invention or the metal-laminated film of the present invention (which may be referred to herein as "the capacitor of the present invention"). This is described below.

In such a capacitor, the stretched film of the present invention can constitute a capacitor as a capacitor dielectric film by, for example, (i) a method using the metal-laminated film, (ii) stacking the stretched film of the present invention without electrodes, and a dielectric metallized on both sides (the dielectric may be, for example, the stretched film of the present invention or another plastic film), or (iii) stacking the stretched film of the present invention without electrodes, and another conductor (e.g., metal foil).

In the step of preparing a capacitor, film-winding processing is performed. For example, the two metal-laminated films of the present invention are paired and stacked in such a manner that the metal layer and the stretched film of the present invention are alternately overlaid and such that the insulation margins of the two films are individually located on sides opposite to each other, i.e., one on one side and the other on the other side, and the pair of the films are wound. In this step, the pair of the metal-laminated films of the present invention are preferably stacked with a shift of 1 to 2 **mm.** The winder to be used is not particularly limited. For example, a 3KAW-N2 automatic winder, produced by Kaido Manufacturing Co., Ltd., can be used.

The film winding processing is not limited to the above method. Alternatively, for example, the stretched film of the present invention with double-sided vapor deposition (in this case, heavy edges being arranged at opposite ends on the front and back surfaces) and the stretched film of the present invention without vapor deposition (the width being 2 to 3 mm narrower than that of the stretched film of the present invention with double-sided vapor deposition) may be alternately stacked and then wound.

In preparing a flat capacitor, after the winding, the obtained wound product is typically pressed. Pressing helps to tighten the roll of the capacitor and/or to form the element. From the viewpoint of controlling and/or stabilizing the gap between the layers, the applied pressure is 2 to 20 kg/cm$^2$, although the optimum value varies depending on, for example, the thickness of the stretched film of the present invention.

Subsequently, molten metal is sprayed on both edge faces of the wound product to form metallikon electrodes, thereby preparing a capacitor.

The capacitor is further subjected to a predetermined heat treatment. Specifically, the present invention includes the step of performing heat treatment on the capacitor (which may be referred to below as "heat aging"). The heat treatment temperature is, for example, 80 to 190°C, but is not particularly limited thereto. The method of performing the heat treatment on the capacitor may be appropriately selected from known methods including, for example, a method using a constant temperature bath in a vacuum atmosphere, and a method using high-frequency induction heating. The time for performing the heat treatment is preferably 1 hour or more, and more preferably 5 hours or more, in terms of obtaining mechanical and thermal stability. In terms of preventing defects in molding such as heat wrinkles and patterning, the time is more preferably 20 hours or less.

Performing the heat treatment can provide the effect of heat aging. Specifically, the gap between the films constituting the capacitor formed from the stretched film of the present invention decreases, thereby suppressing corona discharge and facilitating the crystallization due to the alteration of the internal structure of the stretched film of the present invention. This appears to result in improving the electrical insulation properties. A heat treatment temperature lower than the predetermined temperature cannot sufficiently achieve the effect of heat aging. On the other hand, a heat treatment temperature higher than the predetermined temperature may cause, for example, pyrolysis or oxidative degradation of the stretched film of the present invention.

Lead wires or bus bars are typically welded to the metallikon electrodes of a capacitor that has undergone heat aging. The capacitor is preferably encapsulated in a case and potted in epoxy resin to impart weatherability to the capacitor and, in particular, to prevent degradation of the capacitor by moisture.

The capacitor of the present invention using the stretched film of the present invention is suitably used in a high-temperature environment, and can be a capacitor that has a small size and a high capacity (e.g., 5 $\mu$F or more, preferably 10 $\mu$F or more, and even more preferably 20 $\mu$F or more). Therefore, the capacitor of the present invention can be used, for example, as a high-voltage capacitor, a capacitor for various switching power supplies, a filter capacitor or smoothing capacitor for converters and inverters, or the like, all of which are used in electronic devices, electrical devices, etc. The capacitor of the present invention can also be suitably used as an inverter capacitor, a converter capacitor, or the like that controls the drive motor of an electric vehicle or a hybrid vehicle, for which demand has been increasing in recent years.

Examples

The present invention is described below in detail with reference to Examples and Comparative Examples. However, the present invention is not limited to these Examples.

(1) Measurement Methods

Various measurement methods are as described below.

(1-1) Number Average Molecular Weight (Mn), Weight Average Molecular Weight (Mw), z-Average Molecular Weight (Mz), Molecular Weight Distribution (Mw/Mn), and Molecular Weight Distribution (Mz/Mw) of Polypropylene-based Resin

Using gel permeation chromatography (GPC), the number average molecular weight (Mn), weight average molecular weight (Mw), z-average molecular weight (Mz), molecular weight distribution (Mw/Mn), and molecular weight distribution (Mz/Mw) of each resin were measured under the following conditions.

Specifically, a high-temperature GPC system with a built-in differential refractometer (RI) (HLC-8121GPC-HT, produced by Tosoh Corporation) was used. As columns, three connected TSKgel GMHHR-H(20)HT columns, produced by Tosoh Corporation, were used. The measurement was performed at a column temperature of 140°C while flowing trichlorobenzene as an eluent at a flow rate of 1.0 ml/min. A calibration curve for the molecular weight M was created using a polystyrene standard produced by Tosoh Corporation, and the measurement value was converted to the molecular weight of polypropylene using a Q-factor to obtain the number average molecular weight (Mn), weight average molecular weight (Mw), and z-average molecular weight (Mz). The values of Mw and Mn were used to obtain the molecular weight distribution (Mw/Mn). Further, the values of Mz and Mw were used to obtain the molecular weight distribution (Mz/Mw).

(1-2) Meso Pentad Fraction of Polypropylene-based Resin

Each polypropylene-based resin was dissolved in a solvent and measured using a high-temperature Fourier transform nuclear magnetic resonator (high-temperature FT-NMR) under the following conditions.

High-temperature nuclear magnetic resonator (NMR): High-temperature Fourier transform nuclear magnetic resonator (high-temperature FT-NMR), JNM-ECP500, produced by JEOL Ltd.
Observed nucleus: 13C (125 MHz)
Measurement temperature: 135°C
Solvent: o-dichlorobenzene (ODCB: mixed solvent of ODCB and deuterated ODCB (mixing ratio = 4/1))
Measurement mode: Single-pulse proton broadband decoupling
Pulse width: 9.1 $\mu$sec (45° pulse)
Pulse interval: 5.5 sec

Accumulation count: 4,500 times

Shift standard: $CH_3$ (mmmm)= 21.7 ppm

The meso pentad fraction, which indicates the degree of stereoregularity, was calculated as a percentage (%) from the integral intensity of each signal derived from a combination of five sequences (pentad) composed of sequences arranged in the same direction, i.e., "meso (m)," and sequences arranged in different directions, i.e., "racemo (r)," (e.g., mmmm or mrrm). For the assignment of each signal derived from mmmm, mrrm, etc., a description regarding spectra, such as T. Hayashi et al., Polymer, Vol. 29, page 138, (1988), was referred to.

(1-3) Heptane-insoluble (HI) Content of Polypropylene-based Resin

Each polypropylene-based resin was press-molded into a size of 10 mm × 35 mm × 0.3 mm to prepare a measurement sample of about 3 g. Then, about 150 mL of heptane was added, and Soxhlet extraction was performed for 8 hours. The heptane-insoluble content was calculated from the sample mass before and after extraction.

(1-4) Melt Mass Flow Rate of Resin

The melt flow rate (MFR) of each resin in the form of the raw material resin pellets was measured by a Melt Indexer of Toyo Seiki Co., Ltd. according to JIS K 7210-1:2014. Specifically, first, 4 g of a raw material was inserted into a cylinder at a test temperature (230°C in the case of a polypropylene-based resin; and 260°C in the case of a polymer having an alicyclic structure in a side chain thereof and a polymer having an alicyclic structure in the main chain thereof), and preheated under a load of 2.16 kg for 3.5 minutes. Then, the weight of the raw material resin extruded from the bottom hole for 30 seconds was measured, and MFR (g/10 min) was determined. The above measurement was repeated three times, and the average value was taken as the measured value of MFR.

(1-5) Melting Point and Glass Transition Temperature of Resin

The melting point and the glass transition temperature were calculated using Diamond DSC, which is a power-compensation DSC, produced by PerkinElmer, according to the following procedure. 5 mg of each resin was weighed, packed into an aluminum sample holder, and set in the DSC apparatus. Under a nitrogen flow, the temperature was raised from 30°C to 230°C at a rate of 20°C/min, held at 230°C for 5 minutes, cooled to 30°C at 20°C/min, and held at 30°C for 5 minutes. Thereafter, the melting point and the glass transition temperature were determined from the DSC curve when the temperature was raised again to 230°C at a rate of 20°C/min. Specifically, the melting peak (the largest melting peak when multiple melting peaks were observed) defined in 9.1 (1) of JIS-K7121 was regarded as the melting point, and the midpoint glass transition temperature defined in 9.3 (1) of JIS-K7121 was regarded as the glass transition temperature.

(1-6) Average Particle Diameter of Particles

The average particle diameter of particles was measured in the following manner. Powder was scattered on a sample table so that, as much as possible, individual particles did not overlap each other, and at least 100 particles were observed at a magnification of 10000 to 30000 with an ultra-high-resolution field-emission scanning electron microscope (FE-SEM, S-5200, produced by Hitachi High-Tech Corporation) to acquire an observation image. The largest diameter was measured using image analysis software on the observation image, and the measured values were averaged to determine the average particle diameter.

(2) Production of Resin Composition and Stretched Film

(2-1) Resins Used etc.

Polypropylene-based Resin

- Raw material A: polypropylene-based resin

A1: Isotactic polypropylene resin produced by Prime Polymer Co., Ltd.

Prime Polypro (registered trademark)

MFR: 3.5 g/10 min (measurement temperature: 230°C, load: 2.16 kg)
Melting point: 164°C
Meso pentad fraction: 98.6 mol%
Heptane-insoluble content: 98.1 mass%
Number average molecular weight (Mn): 49000
Weight average molecular weight (Mw): 390000
z-Average molecular weight (Mz): 1520000
Molecular weight distribution (Mw/Mn): 8.0
Molecular weight distribution (Mz/Mw): 3.9

A2: Isotactic polypropylene resin produced by Prime Polymer Co., Ltd.

Prime Polypro (registered trademark)
MFR: 5.6 g/10 min (measurement temperature: 230°C, load: 2.16 kg)
Melting point: 162°C
Meso pentad fraction: 97.4 mol%
Heptane-insoluble content: 97.8 mass%
Number average molecular weight (Mn): 47000
Weight average molecular weight (Mw): 270000
z-Average molecular weight (Mz): 750000
Molecular weight distribution (Mw/Mn): 5.7
Molecular weight distribution (Mz/Mw): 2.8

- Raw material B: Polymer having alicyclic structure in side chain

B1: Produced by USI Corporation

ViviOn (registered trademark) 0645
Glass transition temperature: 146°C
MFR: 5.5 g/10 min (measurement temperature: 260°C, load: 2.16 kg)
Having a cyclohexane structure in a side chain thereof (The cyclohexane structure is formed by hydrogenation of an aromatic ring structure, and the degree of hydrogenation is 99 mol% or more.)

B2: Produced by USI Corporation

ViviOn (registered trademark) 1325
Glass transition temperature: 128°C
MFR: 13 g/10 min (measurement temperature: 260°C, load: 2.16 kg)
Having a cyclohexane structure in a side chain thereof (The cyclohexane structure is formed by hydrogenation of an aromatic ring structure, and the degree of hydrogenation is 99 mol% or more.)

- Raw material C: Polymer having alicyclic structure in main chain

C1: Produced by Polyplastics Co., Ltd.

TOPAS (registered trademark) COC6013S-04
Glass transition temperature: 138°C
MFR: 14 g/10 min (measurement temperature: 260°C, load: 2.16 kg)
Having a norbornene structure in the main chain

- Raw material D: Particles

D1: Silica particles produced by Nippon Shokubai Co., Ltd.

SEAHOSTAR (registered trademark) KE-S100
Average particle diameter: 1.0 μm

<u>(2-2) Methods for Producing Resin Composition and Stretched Film</u> Examples 1 to 6, Examples 8 to 10, Comparative Examples 1 to 2, and Comparative Example 4

Production of Unstretched Film

Raw materials A, B, C, and D were weighed so that the amount of each raw material was as shown in Table 1, and dry-blended using a tumbler to obtain a raw material mixture for a layer A. The raw material mixture for a layer A was fed into a single-screw film-forming extruder (GM-50 produced by GM Engineering Co., Ltd., L/D=32). The raw materials were melted in the extruder set to the melting temperature shown in Table 1, then filtered through a filter with a filtration accuracy of 20 $\mu$m, and extruded from a T-die set to 235°C.

The molten resin was solidified by contact with a mirror-surface metal roll (cooling roll) with a surface temperature of 90°C using an air knife, and molded into a film, thereby obtaining a single-layer unstretched film.

The average slit gap t at the die lip outlet of the T-die was changed so that the draft ratio at this time was the value shown in Table 1.

The thickness of the unstretched film was fine-tuned by changing the extrusion amount and take-up speed so that the thickness after stretching was the target value.

Production of Stretched Film

The unstretched film was introduced into a roll-type longitudinal stretching machine, heated sequentially with five preheating rolls, then heated with a pre-stretching roll whose surface temperature had been adjusted to the temperature ($T_{MD}$) shown in Table 1, and subjected to longitudinal uniaxial stretching in the longitudinal direction (MD) at the ratio shown in Table 1. Subsequently, the film was introduced into a tenter, heated in a preheating zone in which the oven temperature was adjusted to the preheating temperature shown in Table 1, and then stretched in the transverse direction (TD) at the ratio shown in Table 1 in a stretching zone in which the oven temperature was adjusted to the temperature ($T_{TD}$) shown in Table 1. Thereafter, the film was relaxed by 10% in width (transverse direction) in a heating zone set at 170°C. The edges of the stretched film coming out of the tenter were slit to obtain a width of 620 mm, the side on which the air knife had been used was subjected to corona treatment, and the film was wound up, thereby obtaining a stretched film roll. The extrusion amount and take-up speed were fine-tuned so that the thickness of the film was 2.8 $\mu$m. In all of Examples 1 to 6, Examples 8 to 10, Comparative Example 1, and Comparative Example 4, the stretchability of the films was good. On the other hand, the film of Comparative Example 2 broke when stretched at a ratio exceeding the ratio shown in Table 1; thus, the stretchability of the film of Comparative Example 2 was not good.

Example 7

Production of Unstretched Film

75 parts of raw material A1 and 25 parts of raw material B1 were weighed and dry-blended using a tumbler to obtain a raw material mixture for a layer A. The raw material mixture for a layer A was fed into a single-screw film-forming extruder (GM-50 produced by GM Engineering Co., Ltd., L/D=32). The raw materials were melted in the extruder set to 260°C, then filtered through a filter with a filtration accuracy of 20 $\mu$m, and fed to the core layer (layer A) portion of a three-layer multi-die set to 235°C.

99.5 parts of raw material A1 and 0.5 parts of raw material D were weighed and dry-blended using a tumbler to obtain a raw material mixture for a layer B. The raw material mixture for a layer B was fed into a single-screw film-forming extruder (GM-50 produced by GM Engineering Co., Ltd., L/D=32). The raw materials were melted in the extruder set to the melting temperature shown in Table 1, then filtered through a filter with a filtration accuracy of 20 $\mu$m, split into two flow channels, and fed to the skin layer (layer B) portions on both sides of a three-layer multi-die set to 235°C.

A layer B, a layer A, and a layer B were laminated in this order in the three-layer multi-die and extruded from the multi-die.

The three-layer laminated molten resin was solidified by contact with a mirror-surface metal roll (cooling roll) with a surface temperature of 90°C using an air knife, and molded into a film, thereby obtaining a three-layer unstretched film.

The average slit gap t at the die lip outlet of the multi-die was changed so that the draft ratio at this time was 4.0.

The thickness of the unstretched film was fine-tuned by changing the extrusion amount and take-up speed so that the thickness after stretching was the target value.

The extrusion amount was adjusted so that the thickness ratio of each layer of the unstretched film was layer B:layer A:layer B = 1:1.8:1.

Production of Stretched Film

The unstretched film was introduced into a roll-type longitudinal stretching machine, heated sequentially with five preheating rolls, then heated with a pre-stretching roll whose surface temperature had been adjusted to 150°C, and subjected to longitudinal uniaxial stretching in the longitudinal direction (MD) at a stretching ratio of 4.0. Subsequently, the film was introduced into a tenter, heated in a preheating zone in which the oven temperature was adjusted to 170°C, and then stretched in the transverse direction (TD) at a stretching ratio of 10.0 in a stretching zone in which the oven temperature was adjusted to 167°C. Thereafter, the film was relaxed by 10% in width (transverse direction) in a heating zone set at 170°C. The edges of the stretched film coming out of the tenter were slit to obtain a width of 620 mm, the side on which the air knife had been used was subjected to corona treatment, and the film was wound up, thereby obtaining a stretched film roll. The extrusion amount and take-up speed were fine-tuned so that the thickness of the film was 2.8 μm. The stretchability of the film of Example 7 was good.

Comparative Example 3

75 parts of raw material A1 and 25 parts of raw material B1 were weighed and dry-blended using a tumbler to obtain a raw material mixture for a layer A. The raw material mixture for a layer A was fed into a single-screw film-forming extruder (GM-50 produced by GM Engineering Co., Ltd., L/D=32). The raw materials were melted in the extruder set to 260°C, then filtered through a filter with a filtration accuracy of 20 μm, and extruded from a T-die set to 235°C.

The molten resin was solidified by contact with a mirror-surface metal roll (cooling roll) with a surface temperature of 90°C using an air knife, and molded into a film, thereby obtaining a single-layer unstretched film.

The average slit gap t at the die lip outlet of the T-die was changed so that the draft ratio at this time was 40.

The extrusion amount and take-up speed were fine-tuned so that the thickness of the unstretched film was 5 μm.

The edges of the unstretched film were slit to obtain a width of 620 mm, the side on which the air knife had been used was subjected to corona treatment, and the film was wound up, thereby obtaining an unstretched film roll. In this manner, the unstretched film roll was obtained as a comparative product in Comparative Example 3.

Table 1

| | Layer A raw material formulation | | | | | | | Layer B raw material formulation | | | Layer structure | Film forming conditions | | | | | | | | |
|---|---|---|---|---|---|---|---|---|---|---|---|---|---|---|---|---|---|---|---|---|
| | Raw material A | | Raw material B | | Raw material C | | Raw material D | Raw material A | | Raw material D | | Melting temperature | Draft ratio | Longitudinal stretching | | Transverse stretching | | | | Area expansion ratio |
| | Resin used | Parts used | Resin used | Parts used | Resin used | Parts used | Parts used | Resin used | Parts used | Parts used | | | | Temperature $T_{MD}$ | Ratio | Preheating temperature | Temperature $T_{TD}$ | Ratio | |
| | | Parts | | Parts | | Parts | Parts | | Parts | Parts | | °C | | °C | Ratio | °C | °C | Ratio | Ratio |
| Ex. 1 | A1 | 85 | B1 | 15 | - | - | - | - | - | - | A single layer | 260 | 4.0 | 150 | 3.5 | 167 | 165 | 8.9 | 31.2 |
| Ex. 2 | A1 | 75 | B1 | 25 | - | - | - | - | - | - | A single layer | 260 | 4.0 | 150 | 3.5 | 167 | 165 | 7.8 | 27.3 |
| Ex. 3 | A1 | 65 | B1 | 35 | - | - | - | - | - | - | A single layer | 260 | 4.0 | 150 | 3.0 | 167 | 165 | 8.9 | 26.7 |
| Ex. 4 | A1 | 75 | B1 | 25 | - | - | - | - | - | - | A single layer | 260 | 16.0 | 150 | 2.8 | 167 | 165 | 8.9 | 24.9 |
| Ex. 5 | A1 | 75 | B1 | 25 | - | - | - | - | - | - | A single layer | 225 | 4.0 | 150 | 2.8 | 167 | 165 | 8.9 | 24.9 |
| Ex. 6 | A1 | 74.5 | B1 | 25 | - | - | 0.5 | - | - | - | A single layer | 260 | 4.0 | 150 | 3.5 | 167 | 165 | 8.9 | 31.2 |
| Ex. 7 | A1 | 75 | B1 | 25 | - | - | - | A1 | 99.5 | 0.5 | B/A/B | 260 | 4.0 | 150 | 4.0 | 167 | 165 | 10.0 | 40.0 |
| Ex. 8 | A2 | 75 | B1 | 25 | - | - | - | - | - | - | A single layer | 260 | 4.0 | 145 | 3.0 | 165 | 162 | 7.8 | 23.4 |
| Ex. 9 | A1 | 75 | B2 | 25 | - | - | - | - | - | - | A single layer | 260 | 4.0 | 140 | 4.0 | 165 | 160 | 10.0 | 40.0 |
| Ex. 10 | A1 | 90 | B2 | 10 | - | - | - | - | - | - | A single layer | 260 | 4.0 | 150 | 3.5 | 167 | 162 | 8.9 | 31.2 |
| Comp. Ex. 1 | A2 | 100 | - | - | - | - | - | - | - | - | A single layer | 230 | 4.0 | 145 | 5.0 | 165 | 162 | 10.0 | 50.0 |
| Comp. Ex. 2 | A1 | 50 | B1 | 50 | - | - | - | - | - | - | A single layer | 260 | 4.0 | 155 | 2.0 | 170 | 168 | 5.6 | 11.2 |
| Comp. Ex. 3 | A1 | 75 | B1 | 25 | - | - | - | - | - | - | A single layer | 260 | 40.0 | - | 1.0 | - | - | 1.0 | 1.0 |

(continued)

| | Layer A raw material formulation | | | | | | | Layer B raw material formulation | | | Layer structure | Film forming conditions | | | | | | | |
|---|---|---|---|---|---|---|---|---|---|---|---|---|---|---|---|---|---|---|---|
| | Raw material A | | Raw material B | | Raw material C | | Raw material D | Raw material A | | Raw material D | | Melting temperature | Draft ratio | Longitudinal stretching | | Transverse stretching | | | Area expansion ratio |
| | Resin used | Parts used | Resin used | Parts used | Resin used | Parts used | Parts used | Resin used | Parts used | Parts used | | | | Temperature $T_{MD}$ | Ratio | Preheating temperature | Temperature $T_{TD}$ | Ratio | |
| | | Parts | | Parts | | Parts | Parts | | Parts | Parts | | °C | | °C | Ratio | °C | °C | Ratio | Ratio |
| Comp. Ex. 4 | A1 | 75 | - | - | C1 | 25 | - | - | - | - | A single layer | 260 | 4.0 | 155 | 3.0 | 172 | 169 | 7.8 | 23.4 |

(3) Measurement and Evaluation of Physical Properties and Characteristics of Stretched Film

(3-1) Measurement of Total Light Transmittance

The total light transmittance of each of the stretched films obtained in the Examples and Comparative Examples (however, the film of Comparative Example 3 is an unstretched film because it is a comparative product; the same applies hereinafter) was measured in accordance with JIS-K7361 using an NDH-5000 haze meter produced by Nippon Denshoku Industries Co., Ltd.

(3-2) Measurement of Dielectric Breakdown Strength and Insulation Strength Retention

The dielectric breakdown strength at a high temperature of each of the stretched films obtained in the Examples and Comparative Examples was evaluated in the following manner. A measuring device corresponding to the device described in JIS C2151:2006 17.2.2 (plate electrode method) was prepared. However, conductive rubber (E12S10, produced by Seiwa Electric MFG Co., Ltd.) was used as the lower electrode in place of the elastic material described in JIS C2151:2006 17.2.2, and aluminum foil was not wrapped around the electrode.

The measurement environment was set in a forced circulation oven at a set temperature of 120°C or 135°C, and the electrode and film were used after being warmed for 30 minutes in the oven. The voltage was increased from 0 V at a rate of 100 V/sec, and the voltage at which the current value exceeded 5 mA was defined as the dielectric breakdown voltage. The dielectric breakdown voltage $V_{DC}$ of each film was measured 20 times. The dielectric breakdown voltage $V_{DC}$ was divided by the stretched film thickness ($\mu$m), and the average value of 16 points, excluding the upper 2 points and the lower 2 points in the 20 measurement results, was taken as the dielectric breakdown strength ($V_{DC}/\mu$m).

The insulation strength retention (%) was calculated as the ratio of the dielectric breakdown strength in a 135°C environment to the dielectric breakdown strength in a 120°C environment obtained by the above measurement (dielectric breakdown strength in a 135°C environment/dielectric breakdown strength in a 120°C environment).

(3-3) Measurement of Elongation (Evaluation of Rigidity)

Using a TMA/SS6000 thermomechanical analyzer (TMA) produced by Seiko Instruments Inc., the stretched film of each of the Examples and Comparative Examples sampled in the form of a strip measuring 25 mm in the longitudinal direction (MD) and 4 mm in the transverse direction (TD) was set on a quartz tensile probe. With a static load of 16.67 mN per 1 $\mu$m of thickness applied in the MD direction of the stretched film, depending on the thickness of the stretched film, the stretched film was heated from 25°C at a heating rate of 10°C/min, and the elongation (%) from the initial length (25°C) at an oven temperature of 130°C was measured.

Measuring device: TMA/SS6000 produced by Seiko Instruments Inc.
Measurement probe: Quartz tensile probe
Measurement mode: F mode (load control mode)
Static load: A ratio of 16.67 mN per 1 $\mu$m of thickness, depending on the thickness of the stretched film
Initial chuck-to-chuck distance: 15 mm
Set temperature range: 25°C to 170°C
Heating rate: 10°C/min
Data sampling time: 0.5 sec

(3-4) Evaluation of Adaptability for Vapor Deposition Step

The adaptability for a vapor deposition step was evaluated by a vacuum deposition method using the rolls of the stretched films of the Examples and Comparative Examples. Using an EWE-060 vacuum evaporation system produced by ULVAC, Inc., aluminum was vapor-deposited on the corona-treated side of each stretched film at an applied tension of 40 N/m, a vapor deposition speed of 150 m/min, and an electron beam irradiation output of -3.5 KV to bring the stretched film into close contact with a cooling roll that holds the stretched film in close contact during vacuum deposition so that the surface resistivity of the metal film was 20 $\Omega/\square$.

In this process, in addition to both ends in the transverse direction of the stretched film, nine insulation margins (longitudinal margins) each having a width of 4 mm on which no metal was stacked were provided at equal intervals. The portions on which no metal was stacked at a total of 11 locations, including two at both ends in the transverse direction and nine longitudinal margins, tend to be less likely to peel off from the cooling roll than the portions on which the metal was stacked.

The difference in ease of peeling, the effect of heat given by the metal during vapor deposition, etc. may cause breakage in the stretched film. Under these conditions, vapor deposition was performed over a length of 5000 m, and the adaptability for a vapor deposition step were evaluated according to the following criteria.

A: Breakage does not occur in the stretched film even once (0 times).
B: Breakage occurs in the stretched film at least once.

(4) Measurement and Evaluation Results

Table 2 shows the results of measurement and evaluation of the physical properties and characteristics of the stretched films of the Examples and Comparative Examples.

The above evaluation results show that in the stretched films (Examples 1 to 10), which comprise a layer A, wherein the layer A contains, based on the mass of the layer A taken as 100%, 55 mass% or more and 99 mass% or less of a polypropylene-based resin and 1 mass% or more and 45 mass% or less of a polymer having an alicyclic structure in a side chain thereof, and the layer A is stretched in at least one direction, the decrease in rigidity and the decrease in electrical insulation properties were suppressed even in a high-temperature environment exceeding 110°C, and the stretched films were excellent in their own stretchability and adaptability for subsequent processing steps.

Table 2

| | Total light transmittance | Dielectric breakdown strength | | | Elongation | Adaptability for vapor deposition step |
| --- | --- | --- | --- | --- | --- | --- |
| | | 120°C | 135°C | Insulation strength retention | | |
| | % | V/μm | V/μm | % | % | |
| Example 1 | 91.1 | 552 | 489 | 88.6 | 3.9 | A |
| Example 2 | 90.5 | 545 | 502 | 92.1 | 2.9 | A |
| Example 3 | 86.4 | 512 | 478 | 93.4 | 2.7 | A |
| Example 4 | 89.6 | 539 | 491 | 91.1 | 3.2 | A |
| Example 5 | 88.3 | 518 | 467 | 90.2 | 3.4 | A |
| Example 6 | 90.1 | 543 | 501 | 92.3 | 2.9 | A |
| Example 7 | 90.0 | 560 | 493 | 88.0 | 3.6 | A |
| Example 8 | 90.7 | 486 | 439 | 90.3 | 3.3 | A |
| Example 9 | 91.4 | 548 | 477 | 87.0 | 4.4 | A |
| Example 10 | 91.2 | 540 | 474 | 87.8 | 4.3 | A |
| Comparative Example 1 | 93.0 | 483 | 398 | 82.4 | 6.5 | A |
| Comparative Example 2 | 52.1 | 352 | 334 | 94.9 | 3.6 | B |
| Comparative Example 3 | 71.2 | 349 | 306 | 87.7 | 8.2 | B |
| Comparative Example 4 | 79.0 | 447 | 340 | 76.1 | 7.3 | B |

**Claims**

1. A stretched film comprising at least a layer A, wherein

(1) the layer A contains, based on 100 mass% of the layer A,

55 mass% or more and 99 mass% or less of a polypropylene-based resin and 1 mass% or more and 45 mass% or less of a polymer having an alicyclic structure in a side chain thereof; and

(2) the layer A is stretched in at least one direction.

2. The stretched film according to claim 1, wherein the layer A contains, based on 100 mass% of the layer A, 55 mass% or more and 97 mass% or less of the polypropylene-based resin and 3 mass% or more and 45 mass% or less of the polymer having an alicyclic structure in a side chain thereof.

3. The stretched film according to claim 1, wherein the polymer has a glass transition temperature of 100°C or higher and 180°C or lower.

4. The stretched film according to claim 1, wherein the alicyclic structure comprises a cyclohexane structure.

5. The stretched film according to claim 1, wherein the stretched film has a thickness of 10 $\mu$m or less and a total light transmittance of 80% or more.

6. A metal-laminated film comprising the stretched film of any one of claims 1 to 5 and a metal layer laminated on one or both surfaces of the film.

7. A film capacitor comprising the stretched film of any one of claims 1 to 5.

8. A film capacitor comprising the metal-laminated film of claim 6.

## INTERNATIONAL SEARCH REPORT

| | International application No. |
|---|---|
| | **PCT/JP2024/016112** |

### A. CLASSIFICATION OF SUBJECT MATTER

*C08J 5/18*(2006.01)i; *B32B 15/08*(2006.01)i; *B32B 15/085*(2006.01)i; *B32B 27/32*(2006.01)i; *C08L 23/10*(2006.01)i; *H01G 4/32*(2006.01)i

FI: C08J5/18 CES; B32B15/08 E; B32B15/085; H01G4/32 511L; B32B15/08 Z; B32B27/32 102; C08L23/10

According to International Patent Classification (IPC) or to both national classification and IPC

### B. FIELDS SEARCHED

Minimum documentation searched (classification system followed by classification symbols)

C08J5/18; B32B15/08; B32B15/085; B32B27/32; C08L23/10; H01G4/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2-135245 A (SUMITOMO CHEMICAL CO., LTD.) 24 May 1990 (1990-05-24) claims, examples | 1-5 |
| X | JP 2-135243 A (SUMITOMO CHEMICAL CO., LTD.) 24 May 1990 (1990-05-24) claims, p. 4, lower left column, lines 15-17, examples | 1-5 |
| Y | | 5-8 |
| Y | JP 2017-19923 A (ZEON CORPORATION) 26 January 2017 (2017-01-26) claims, paragraphs [0045]-[0049], examples | 1-8 |
| Y | JP 2015-146374 A (OJI HOLDINGS CORPORATION) 13 August 2015 (2015-08-13) claims, paragraph [0111], examples | 1-8 |
| A | JP 2019-176123 A (PRIME POLYMER CO., LTD.) 10 October 2019 (2019-10-10) entire text | 1-8 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/016112** |

| Patent document cited in search report | | | Publication date (day/month/year) | Patent family member(s) | | | Publication date (day/month/year) |
| --- | --- | --- | --- | --- | --- | --- | --- |
| JP | 2-135245 | A | 24 May 1990 | US claims, examples | 5032645 | A | |
| JP | 2-135243 | A | 24 May 1990 | US claims, examples | 5141994 | A | |
| JP | 2017-19923 | A | 26 January 2017 | (Family: none) | | | |
| JP | 2015-146374 | A | 13 August 2015 | (Family: none) | | | |
| JP | 2019-176123 | A | 10 October 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014037532 A

- WO 2022270577 A

**Non-patent literature cited in the description**

- **T. HAYASHI et al.** *Polymer*, 1988, vol. 29, 138